# EUROPEAN PATENT SPECIFICATION

(11) **EP 3 758 501 B1**
(45) Date of publication and mention of the grant of the patent: **22.04.2026**
(21) Application number: 19730914.9
(22) Date of filing: 27.02.2019
(51) Int. Cl.: A23G 3/34, A23G 3/40, A23G 3/42, A23G 3/46, A23G 3/50

(54) **PROCESS FOR THE PREPARATION OF A CONFECTIONERY PRODUCT AND THE PRODUCT OBTAINED**
VERFAHREN ZUR HERSTELLUNG EINES KONFEKTPRODUKTES UND ERHALTENES PRODUKT
PROCÉDÉ DE PRÉPARATION D'UN PRODUIT DE CONFISERIE ET PRODUIT OBTENU

(30) Priority: 28.02.2018 IT 201800003121
(43) Date of publication of application: 06.01.2021
(73) Proprietor: Perfetti Van Melle S.p.A., 20020 Lainate (Milano) (IT)
(72) Inventor: BOTTINI, Alessandro, 20020 Lainate (MI) (IT); LIN, Zhiqi, Shanghai, 201107 (CN); RUGGERI, Alessandro, 20129 Milano (IT); MARINI, Mauro, 20020 Lainate (MI) (IT); CAPPELLETTI, Claudia, 20020 Lainate (MI) (IT); ALTAMIRANO RIOS, Ana Veronica, Estado de México, 50200 (MX)
(74) Representative: Bianchetti & Minoja with Trevisan & Cuonzo IPS SRL
(86) International application number: PCT/IB2019/051564
(87) International publication number: WO 2019/166963

(56) References cited:
- JP-A- H0 662 749
- JP-A- H0 662 749
- DATABASE GNPD [online] MINTEL; 17 September 2013 (2013-09-17), ANONYMOUS: "Pure Premium Milk Candies", XP055509236, retrieved from https://www.gnpd.com/sinatra/recordpage/2179372/ Database accession no. 2179372
- DATABASE GNPD [online] MINTEL; 22 November 2017 (2017-11-22), ANONYMOUS: "Brown Sugar and Milk Flavoured Candy Dice", XP055509782, retrieved from https://www.gnpd.com/sinatra/recordpage/5260733/ Database accession no. 5260733
- DATABASE GNPD [online] MINTEL; 17 September 2013 (2013-09-17), ANONYMOUS: "Pure Premium Milk Candies", XP055509236, retrieved from www.gnpd.com Database accession no. 2179372
- DATABASE GNPD [online] MINTEL; 22 November 2017 (2017-11-22), ANONYMOUS: "Brown Sugar and Milk Flavoured Candy Dice", XP055509782, retrieved from www.gnpd.com Database accession no. 5260733

## Description

The invention relates to a process for the preparation of hard candies characterised by regions of different colours, at least one of which is white, containing no titanium dioxide, and preferably comprising condensed milk with the function of bleaching agent and opacifier, and the resulting product.

### PRIOR ART

Confectionery products, especially hard candies, characterised by white regions, are normally made with white pigments, one of the most widely used being the additive titanium dioxide. Alternatively, other white pigments such as carbonates (obtained by grinding or precipitated) or starches are used.

The use of titanium dioxide is designed to obtain a region characterised by a bright, opaque white colour that does not turn yellow during the production process. Yellowing during the process of obtaining the white portions of hard candies is due to cooking of the fatty portion and the sugars contained in the product.

However, the safety of titanium dioxide as a food additive is currently being verified by the regulatory authorities. The need has therefore arisen to evaluate possible substitutes for titanium dioxide which provide the same effect but without involving product safety risks.

Deposited hard candies are usually made by standard continuous or semi-continuous manufacturing processes described in the scientific literature of the industry, such as the text "Sugar Confectionery Manufacture", 2nd edition, 1999, pp. 148-149.

Candies containing milk or derivatives are known, for example, from US 20110305818, which also discloses their production method. However, said candies contain sugar crystals and have a water content ranging from 5% to 9% of the total candy.

Said method involves preparing a solution consisting of water, sugar and a saccharide other than sugar. Said mixture is pre-heated, and fats, oils, emulsifying agents, and milk and derivatives thereof are added.

The resulting mixture is then cooked and subsequently cooled, and sent for shaping into individual candies of the desired shape.

In particular, the preparation of the solution involves a pre-cooking step which, according to the above-mentioned manual, is conducted in a tank at temperatures ranging from 110 to 112°C.

Fats, oils, emulsifying agents, and milk and derivatives thereof are added to the pre-cooked syrup according to US20110305818. Only that mixture undergoes a cooking step. The temperatures used at the cooking step, not specified in US20110305818, range from 140 to 144°C, as reported in the above-mentioned manual, which also teaches the steps after cooking which are required to produce a hard candy. In particular the cooked mass is then sent to a vacuum chamber wherein it resides before being poured into moulds. The negative pressure applied in the chamber does not exceed -0.98 bars relative to atmospheric pressure.

Colourings, flavourings and other additives can be added during the transfer of the mass from the vacuum chamber to the moulding station.

After formation of the individual candies in the moulds, the candies obtained are sent to the final nackaging step. However. US2011 0305818 says nothing about the colour of the candies obtained by the method described. JPH0662749 discloses a white candy comprising 8 percent by weight of condensed milk and no further white pigments.

DATABASE GNPD MINTEL; 17 September 2013 (2013-09-17), anonymous: "Pure Premium Milk Candies" describes a white candy comprising condensed milk and no white pigments. The quantity of condensed milk is not given.

DATABASE GNPD MINTEL; 22 November 2017 (2017-11-22), anonymous: "Brown Sugar and Milk Flavoured Candy Dice"describes a swirl with alternate white and brown portions. The white portion comprises condensed milk and no white pigments. The quantity of condensed milk is not given.

There is therefore still a need to produce hard, preferably moulded, candies which have a white appearance, but without containing titanium dioxide.

### DESCRIPTION OF THE INVENTION

It has been found that hard, preferably moulded candies, which are multicoloured with at least one white portion, can be advantageously obtained without the use of titanium dioxide. The hard candies obtained according to the invention do not contain crystallised sugars or other crystallised ingredients, and are preferably in a totally amorphous state. The candies obtained according to the invention are preferably characterised by a residual water content ranging from 0.5% to 5%, preferably from 0.7% to 3%, most preferably from 1.2% to 2.7% by weight of the finished candy.

The candies of the invention are in overlaid layers or segments (also known as swirls), wherein white portions alternate with portions of other colours.

Another form of embodiment involves the insertion of a stick to obtain a lollipop, the edible part whereof is as described above.

It has been found that in order to obtain the characteristic of a bright, opaque white colour in confectionery products without generating yellowing of the white portion in the process, it is necessary to operate, during the mass cooking step, under lower temperature and higher negative pressure conditions than the standard ones described in the prior art.

It has also been found that condensed milk can be advantageously used as a replacement for titanium dioxide in confectionery products, in particular hard candies, which are multicoloured with at least one white portion. The object of the invention, in a first aspect thereof, is a process for the production of confectionery products, in particular hard candies, containing neither crystallised ingredients nor titanium dioxide, said candies being multicoloured, with at least one white portion, which comprises the following steps:
- preparing a first liquid mixture of ingredients comprising condensed milk ranging from 0.5% to 5% by weight of the total candy and optionally animal and/or vegetable fats selected from butter, vegetable oils, hydrogenated vegetable oils, cocoa butter, lard, ghee, cream and powdered milk,
- preparing a second liquid mixture in the form of an aqueous solution comprising at least sugar and glucose syrup, either alone or combined with one another, preferably at a temperature below 130°C;
- mixing the first mixture and the second mixture, preferably in a ratio of 1:100 to , 1:1, more preferably 1:50 to 1:10, most preferably from 1:40 to 1:15;
- transferring the resulting mass into a vacuum cooker and cooking the candy mass at a pressure ranging from -0.20 to -0.5 bars, preferably from -0.3 to -0.4 bars, most preferably from -0.2 to -0.35 bars, relative to atmospheric pressure, and at a temperature ranging from 130°C to 139°C, preferably from 131°C to 138°C
   and
- dividing the mass of candy after cooking into one or more streams and conveying each of said streams to one or more static mixers wherein at least one flavouring, colouring or additive is added on the proviso that the colourings do not contain white pigments;
- placing the one or more resulting masses in heated hoppers;
- pouring the one or more masses from the hoppers into moulds to obtain individual candies characterised by one or more white regions, wherein white portions alternate with portions of other colours.

The cooked mass is then poured into moulds of the chosen shape and, after cooling and extraction from the moulds, the resulting candies are conveyed to the packaging unit.

In the process according to the invention, an aqueous solution comprising one or more of the following is preferably added to the first mixture: sodium chloride, sodium bicarbonate, lecithin and maltodextrin.

The vacuum cooker is preferably the microfilm type, used according to the prior art.

The candy masses are preferably maintained in the hoppers at temperatures sufficient to keep the mass at a suitable level of fluidity for the subsequent pouring; said temperatures are preferably lower than 139°C, most preferably lower than 135°C.

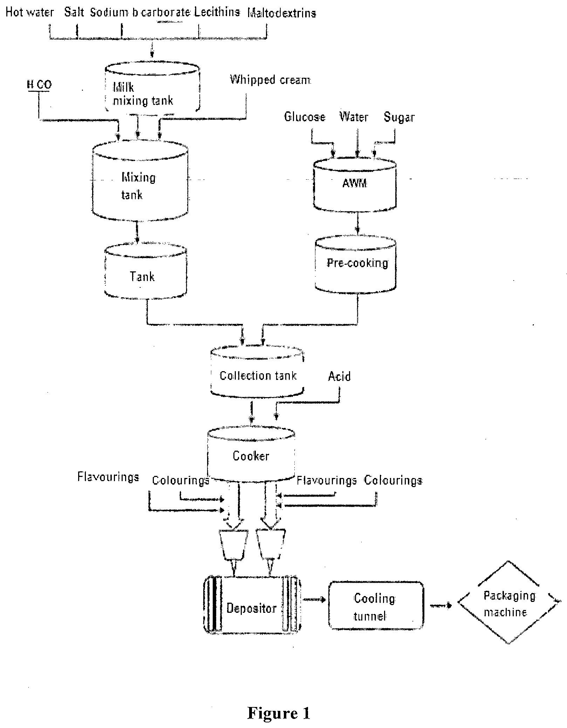

Figure 1 contains the flow chart of the process according to the invention by way of example.

A further object of the invention is the use of condensed milk ranging from 0.5% to 5% by weight as a replacement additive for titanium dioxide in confectionery products having at least one white portion, wherein white portions alternate with portions of other colours .

A further object of the invention consists of hard candies which are multicoloured with at least one white portion, characterised by a percentage of condensed milk ranging from 0.5% to 5% by weight of the total candy, and by the absence of titanium dioxide and crystallised ingredients.

"Condensed milk" means a form of milk rendered storable by removing about 60% of its water content, typically by low-pressure evaporation. Condensed milk is available on the market or can be prepared by known methods, including by reconstitution from powdered milk. The condensed milk is preferably used in a percentage ranging from 0.5% to 1.2% by weight of the total candy.

The ingredients of the confectionery product are conventional, and typically include sucrose, glucose syrup, polyols, cream, hydrogenated oils or fats, salt, flavourings and flavour enhancers, emulsifiers, acidifiers and colourings.

In particular, the candies according to the invention contain sugar, glucose syrup and animal and/or vegetable fats. The fats are preferably contained in a ratio of 1% to 50%, preferably 1.5% to 20%, most preferably 2% to 10% by weight of the total candy.

The test for the degree of whiteness and opacity of the candies made according to the invention, compared with the degree of whiteness and opacity of candies with titanium dioxide made by the conventional process, was conducted with a portable X-Rite spectrophotometer equipped with sphere reflection geometry for the determination of the coordinates L*a*b.

The candies of the invention are therefore characterised, in the white areas, by the following parameters: L from 55 to 90, a from -3 to +3, and b from 15 to -3. Candies characterised by L from 68 to 79, a from -2 to +2 and b from 17 to 7 are particularly preferred.

The process according to the invention is illustrated in detail in Example 1 below. Example 1. Preparation of a hard candy having the following composition:

### Composition of white mass

| **Ingredients** | % |
|---|---|
| Sugar | 50 |
| Glucose syrup | 37 |
| Condensed milk | 1 |
| Cream | 1 |
| Hydrogenated vegetable oil | 6 |
| Salt | 0.2 |
| Lecithin | 0.3 |
| Acidifiers | 1 |
| Flavourings | 0.5 |
| Residual water | 3 |
| Total | 100 |

### Composition of red mass

| **Ingredients** | % |
|---|---|
| Sugar | 50 |
| Glucose syrup | 37 |
| Condensed milk | 1 |
| Cream | 1 |
| Hydrogenated vegetable oil | 6 |
| Salt | 0.2 |
| Lecithin | 0.3 |
| Acidifiers | 1 |
| Flavourings | 0.5 |
| Residual water | 3 |
| Allura Red | 0.005 |
| Total | 100 |

The hot water, sodium chloride salt, sodium bicarbonate, condensed milk and maltodextrins are mixed in a tank heated to a maximum temperature of 60°C for 15 minutes. Lecithin is then added, and the mass is mixed at the same temperature for a further 5 minutes.

The hydrogenated vegetable oils and cream are added, and the resulting mixture is stirred for 20 minutes at a maximum temperature of 55°C.

A liquid mixture of water, sugar and glucose syrup is prepared in a separate tank, and pre-cooked at 125°C.

The first mixture, containing fats, and the liquid mixture, containing sugar, are conveyed to a collection tank, where other ingredients may be added.

The mass is then transferred to a microfilm cooker operating at a temperature not exceeding 139°C and a negative pressure not exceeding -0.5 bars relative to atmospheric pressure for about 15 seconds.

The mass is divided into two streams; flavouring is added to each one in static mixers, and Allura Red colouring is added to one of the two streams. The two completed masses are then inserted in two separate, heated hoppers of a depositing machine. Candies with alternating white and red segments are then poured into teflon-coated steel moulds. Pouring into the moulds is followed by cooling, removal of the candies from the moulds, and packaging of the end product.

Figure 1 is a flow chart of the process exemplified.

## Claims

1. A process for making confectionery products, in particular hard candies containing neither crystallised ingredients nor titanium dioxide, said candies being multicoloured, with at least one white portion, which comprises the following steps:
- preparing a first liquid mixture of ingredients comprising condensed milk ranging from 0.5% to 5% by weight of the total candy and optionally animal and/or vegetable fats selected from butter, vegetable oils, hydrogenated vegetable oils, cocoa butter, lard, ghee, cream and powdered milk;
- preparing a second liquid mixture in the form of an aqueous solution comprising at least sugar and glucose syrup, either alone or combined with one another;
- mixing the first mixture and the second mixture;
- transferring the resulting mass into a vacuum cooker and cooking the candy mass at a pressure ranging from -0.2 to -0.5 bars relative to atmospheric pressure and at a temperature ranging from 130°C to 139°C; and
- dividing the mass of candy after cooking into one or more streams and conveying each of said streams to one or more static mixers wherein at least one flavouring, colouring or additive is added on the proviso that the colourings do not contain white pigments;
- placing the one or more resulting masses in heated hoppers;
- pouring the one or more masses from the hoppers into moulds to obtain individual candies **characterised by** one or more white regions, wherein white portions alternate with portions of other colours.

2. A process as claimed in claim 1 wherein the cooking step is conducted at a temperature ranging from 130°C to 139°C and at a pressure ranging from -0.3 to -0.4 bars relative to atmospheric pressure.

3. A process as claimed in claim 1 wherein an aqueous solution is added to the first mixture, which said solution comprises one or more of the following: sodium chloride, sodium bicarbonate, lecithin and maltodextrin.

4. A hard candy which is multicoloured with at least one white portion, containing condensed milk ranging from 0.5% to 5% by weight of the total candy and optionally animal and/or vegetable fats, and **characterised by** the absence of crystallised ingredients and the absence of titanium dioxide, wherein white portions alternate with portions of other colors.

5. Use of condensed milk ranging from 0.5% to 5% by weight as a replacement additive for titanium dioxide in confectionery products having at least one white portion, wherein white portions alternate with portions of other colors.

## Patentansprüche

1. Verfahren zur Herstellung von Süßwaren, insbesondere von Hartbonbons, die keine kristallisierten Zutaten und kein Titandioxid enthalten, wobei die Bonbons mehrfarbig sind und mindestens einen weißen Anteil aufweisen, das die folgenden Schritte umfasst:
- Herstellen einer ersten flüssigen Mischung aus Zutaten, umfassend kondensierte Milch in einer Menge von 0,5 bis 5 Gew.-% der Gesamtbonbonmasse und gegebenenfalls tierische und/oder pflanzliche Fette, ausgewählt aus Butter, pflanzlichen Ölen, hydrierten pflanzlichen Ölen, Kakaobutter, Schmalz, Ghee, Sahne und Milchpulver;
- Herstellen einer zweiten flüssigen Mischung in Form einer wässrigen Lösung, umfassend mindestens Zucker und Glukosesirup, entweder allein oder miteinander kombiniert;
- Mischen der ersten Mischung und der zweiten Mischung;
- Überführen der resultierenden Masse in einen Vakuumkocher und Kochen der Bonbonmasse bei einem Druck im Bereich von -0,2 bis -0,5 bar relativ zum atmosphärischen Druck und bei einer Temperatur von 130°C bis 139°C; und
- Aufteilen der Bonbonmasse nach dem Kochen in einen oder mehrere Ströme und Befördern jedes dieser Ströme zu einem oder mehreren statischen Mischern, in denen mindestens ein Aroma, Farbstoff oder Zusatzstoff hinzugefügt wird, unter der Voraussetzung, dass die Farbstoffe keine weißen Pigmente enthalten;
- Einfüllen der einen oder mehreren resultierenden Massen in beheizte Trichter;
- Gießen der einen oder mehreren Massen aus den Trichtern in Formen, um einzelne Bonbons zu erhalten, die durch einen oder mehrere weiße Bereiche gekennzeichnet sind, wobei sich weiße Anteile mit Anteilen anderer Farben abwechseln.

2. Verfahren gemäß Anspruch 1, wobei der Kochschritt bei einer Temperatur im Bereich von 130°C bis 139°C und bei einem Druck im Bereich von -0,3 bis -0,4 bar relativ zum atmosphärischen Druck durchgeführt wird.

3. Verfahren gemäß Anspruch 1, wobei der ersten Mischung eine wässrige Lösung zugesetzt wird, die eine oder mehrere der folgenden Substanzen enthält: Natriumchlorid, Natriumbicarbonat, Lecithin und Maltodextrin.

4. Mehrfarbiges Hartbonbon mit mindestens einem weißen Anteil, das 0,5 bis 5 Gew.-% Kondensmilch, bezogen auf das Gesamtgewicht des Bonbons, und gegebenenfalls tierische und/oder pflanzliche Fette enthält und sich durch das Fehlen kristallisierter Zutaten und das Fehlen von Titandioxid auszeichnet, wobei sich weiße Anteile mit Anteilen anderer Farben abwechseln.

5. Verwendung von Kondensmilch in einem Anteil von 0,5 bis 5 Gew.-% als Ersatzzusatzstoff für Titandioxid in Süßwaren mit mindestens einem weißen Anteil, wobei sich weiße Anteile mit Anteilen anderer Farben abwechseln.

## Revendications

1. Procédé de préparation de produits de confiserie, en particulier de bonbons durs ne contenant ni ingrédients cristallisés ni dioxyde de titane, lesdits bonbons étant multicolores, présentant au moins une partie blanche, qui comprend les étapes suivantes :
- préparation d'un premier mélange liquide d'ingrédients comprenant du lait condensé dans une plage de 0,5% à 5% en poids du bonbon total et éventuellement des graisses animales et/ou végétales choisies parmi le beurre, les huiles végétales, les huiles végétales hydrogénées, le beurre de cacao, le saindoux, le beurre clarifié, la crème et le lait en poudre ;
- préparation d'un second mélange liquide sous la forme d'une solution aqueuse comprenant au moins du sucre et du sirop de glucose, soit seuls, soit combinés l'un avec l'autre ;
- mélange du premier et mélange du second mélange;
- transfert de la masse obtenue dans un cuiseur sous vide et la cuisson de la masse de bonbon à une pression dans la plage de -0,2 à -0,5 bar par rapport à la pression atmosphérique et à une température dans la plage de 130°C à 139°C ; et
- répartition de la masse de bonbon après cuisson en un ou plusieurs flux et le transport de chacun desdits flux vers un ou plusieurs mélangeurs statiques dans lesquels au moins un arôme, colorant ou additif est ajouté, à condition que les colorants ne contiennent pas de pigments blancs ;
- placement de ladite une ou desdites plusieurs masses obtenues dans des trémies chauffées ;
- déversement de ladite une ou desdites plusieurs masses à partir des trémies dans des moules afin d'obtenir des bonbons individuels **caractérisés par** une ou plusieurs régions blanches, des parties blanches alternant avec des parties d'autres couleurs.

2. Procédé selon la revendication 1, l'étape de cuisson étant réalisée à une température dans la plage de 130°C à 139°C et à une pression dans la plage de -0,3 à - 0,4 bar par rapport à la pression atmosphérique.

3. Procédé selon la revendication 1, la solution aqueuse étant ajoutée au premier mélange, ladite solution comprenant l'une ou plusieurs des substances suivantes : chlorure de sodium, bicarbonate de sodium, lécithine et maltodextrine.

4. Bonbon dur qui est multicolore, présentant au moins une partie blanche, contenant du lait condensé dans la plage de 0,5% à 5% en poids du bonbon total et éventuellement des graisses animales et/ou végétales et **caractérisé par** l'absence d'ingrédients cristallisés et l'absence de dioxyde de titane, des parties blanches alternant avec des parties d'autres couleurs.

5. Utilisation de lait condensé dans la plage de 0,5% à 5% en poids comme additif de remplacement du dioxyde de titane dans des produits de confiserie présentant au moins une partie blanche, des parties blanches alternant avec des parties d'autres couleurs.
